# EUROPEAN PATENT SPECIFICATION

(11) **EP 2 949 937 B1**
(45) Date of publication and mention of the grant of the patent: **21.12.2016**
(21) Application number: 14170314.0
(22) Date of filing: 28.05.2014
(51) Int. Cl.: F04B 43/12

(54) **Convertor**
Umformer
Convertisseur

(43) Date of publication of application: 02.12.2015
(73) Proprietor: Max-Planck-Gesellschaft zur Förderung der Wissenschaften e.V., 80539 München (DE)
(72) Inventor: Fischer, Peer, 79100 Freiburg (DE); Mark, Andrew, 70563 Stuttgart (DE)
(74) Representative: Manitz, Finsterwald & Partner GbR

(56) References cited:
- WO-A2-2012/071477
- US-A- 3 902 084
- US-A1- 2012 056 350
- US-B2- 8 302 696

## Description

The present invention relates to a convertor for converting alternating movement to unidirectional movement.

Convertors of this kind are actually relatively rare and mainly in the form of peristaltic pumps and so-called, inchworm motors. Peristaltic pumps however actually produce unidirectional movement of a fluid, and are arranged at a fixed position and thus do not themselves move.

Another form of convertor, which does not actually convert alternating movement into unidirectional movement, is provided in the form of pipeline pigs. Pipeline pigs are designed for introduction into e.g. a natural gas or an oil pipeline, in order to clean residues from the inside of the pipeline. Some pipeline pigs are drawn by cables, some are pushed along a pipeline by the fluid flowing in a pipeline, others have first and second spaced apart braking elements which are alternately energized to frictionally engage the inside of the pipeline to permit the pig to inch its way along the pipeline.

Generally speaking the known convertors tend to be complicated, to involve many moving parts which makes them relatively costly and expensive to maintain, as well as requiring a fairly sophisticated control mechanism.

For this reason it is the object of the present invention to provide a convertor of the above kind which is of relatively simple design, can be manufactured economically, has few moving parts and can be realized to cope with a large variety of different tasks.

This object is satisfied by a convertor in accordance with claim 1.

Such a convertor for converting alternating movement to unidirectional movement, typically comprises an actuator for generating the alternating movement, the actuator being disposed to exert compressive and tensile forces on first and second members, the first said member having a positive Poisson's ratio and the second said member having a negative Poisson's ratio, and the first and second members being adapted for differential frictional engagement with a structure.

Thus the present invention is based on the idea of using an auxetic material (a material having a negative Poisson's ratio) in conjunction with a normal kind of material (a material having a positive Poisson's ratio) and an actuator to form a convertor capable of converting alternating movement to unidirectional movement. Such a convertor can be of relatively simple construction since it involves only three basic parts in the form of the first and second members and the actuator and can be designed both with very small dimensions or with very large dimensions so that it can be used in miniature applications and in large scale applications, for example as a pipeline pig which can e.g. clean the passages in a heat exchanger and or in a crude oil pipeline.

Moreover, the use of auxetic materials advantageously leads to a reduction of the number of actuators required e.g. in comparison to an inchworm motor or a pipeline pig. Thus the number of moveable parts used in a convertor is minimized, i.e. the convertor becomes more easily controllable. Moreover, the convertor can be designed at relatively low cost. Since the first and second members are basically simply blocks of material that expand and contract they are not usually susceptible to wear in use provided they are suitably selected/designed to cope with cyclical expansion and contraction. The structure can take on very diverse forms and is actually an object relative to which the convertor has to move in use.

Preferably the first and second members comprise a friction enhancing outer coating or layer which generates an increased coefficient of friction with the structure and prevents unwanted slippage of the member which is engaging the structure at anyone time.

Since only one actuator is used there is no need for actuator synchronization.

To date auxetic materials have been investigated as materials to be used in applications such as for packing material, for knee and elbow pads, i.e. as a kind of shock absorbing material. However, the use of a shock absorbing material in no way suggests the use of the material as a convertor in order to convert an alternating movement to a unidirectional movement.

US 8,302,696 B2 suggests the use of an auxetic material as a form of actuator, i.e. as a device which can be used to actuate a further device. The actuator disclosed there is formed by a tubular structure which is directly surrounded by a member made of an auxetic material. The auxetic material causes the actuator to expand and contract permitting items to be clamped thereby, i.e. pincers can be actuated in order to clamp and release items between the pincers.

However, US 8,302,696 B2 does not disclose a convertor per se which can convert alternating movement to unidirectional movement. An actuator for generating the alternating movement is also not disclosed. There is also no indication that the actuator could be disposed such that it can exert compressive and tensile forces on first and second members nor that both the first and second members could be adapted for differential frictional engagement with a structure.

Preferably the unidirectional movement is at least one of a linear movement and a rotational movement. Linear movement advantageously permits the convertor to carry out a straight line movement relative to the structure, whereas a convertor which transforms the motion into a rotational movement permits a rotational movement to be carried out about or within a structure. Selecting an appropriate design of the actuator may also permit a combined rotational and linear movement relative to a structure to be carried out.

In a preferred embodiment the convertor is installed within the structure, such as a pipe, whereby the convertor moves unidirectionally relative to the structure within the structure. This means the convertor could advantageously be installed in a structure such as a pipeline in order to effect a movement within the pipeline, for example to clean the inside of the pipeline, to inspect the inside of a pipeline or to transport objects within a pipeline, so that e.g. repairs thereof can be carried out or the material of the pipeline can be inspected using such objects. This means a person carrying out any of the aforementioned tasks at the pipeline can do these from a remote position. Moreover, this type of convertor utilizes what could be considered a robust passive clutch mechanism.

In a further preferred embodiment the convertor can be installed outside of the structure, such as a tube or a rope, whereby the convertor moves unidirectionally relative to the structure at the outside of the structure. The convertor can be fixed and used to propel a rod or a tube and could for example be used as a feed mechanism for a welding rod. Alternatively the convertor can move along a rod or a tube which are fixed. A convertor as described herein could be used to move relative to a cable of a cable car to inspect the cable, or to carry a camera up a vertical free standing pipe. Another application would be the cleaning of large glass or metal surfaces of a multi-story building. For example, cables could be placed vertically between the top and bottom of the building and a spray bar and wiper blade could be mounted on a convertor or a plurality of convertors designed to move up and down one or more such cables thereby washing and cleaning the relative surfaces. These actions can be carried out from a remote position without requiring specific structures which would be required if these actions would have to be carried out by a person. Thus the need for special safety structures, such as platforms, safety harnesses and helicopters etc. can be reduced or avoided for some applications.

A typical example of a mechanical device which effects a movement of a structure relative to its driving apparatus is an inchworm motor, these are well known in the prior art. Inchworm motors are devices capable of moving themselves along a fixed shaft or within a tube. A known inchworm motor can be fixed and used to propel a rod or a tube. The mechanism works by cyclically actuating and relaxing three independent actuators, one providing longitudinal extension and two that engage the shaft or the tube respectively. A typical example of an inchworm motor is disclosed in US 3,902,084B1, however, this device does not disclose a convertor which makes use of an auxetic material, thus requiring only a single actuator and avoiding any need for the synchronization of multiple actuators.

Typically the alternating movement is one of a cyclic movement or an oscillatory movement, such as alternating expansion and contraction movements generated by a rotary engine or a pressure generated alternating movement between an expanded state and a contracted state.

Preferably the actuator is a member selected from the group comprising an electric motor, a piezoelectric actuator, an electrostatic actuator, an electromagnetic actuator, a pneumatic actuator, a hydraulic actuator, and an internal combustion engine.

In a further preferred embodiment the convertor further comprises a plurality of pairs of first and second members. Such a plurality of pairs of members is advantageously used in a convertor by means of which a rotational movement is effected relative to the structure. The pairs typically, but not necessarily, operate in parallel, to increase the motive force of the assembly.

The plurality of pairs of first and second members could advantageously be combined with a plurality of actuators, with each actuator being disposed to exert compressive and tensile forces on a respective one of the plurality of pairs of first and second members. Such an assembly can advantageously be used to effect a simultaneous linear and rotational unidirectional movement relative to the structure.

Convertors as herein discussed can advantageously be used in apparatus adapted to at least one of the following purposes selected from the group comprising for feeding a welding rod, cleaning of structures, such as a pipeline, rope climbing, as an inspection device, for example in sewers and pipes, such as for weld inspection, as a placement device, for example in nuclear reactors to avoid human exposure to radiation or to avoid opening a vessel or to place a camera, in medical applications, for example for inspection of blood vessels and the placement of stents, for use in running wires or cables through conduit, or applying coatings to the inside of channels.

This means convertors of the present invention can be used in micro applications, i.e. within the human body and also in macrosystems, such as pipelines. Prior art convertors typically utilize mechanical parts and can therefore not be used for such a variety of applications, since they cannot readily be manufactured to work in such micro applications.

Alternatively a convertor as discussed herein could be used as one of a pump in order to effect a movement of substances relative to the structure, for example to move a column of liquid along a pipe, a stepper motor, for example for driving a ball screw in a machine tool, and as a feed apparatus, for example for feeding a welding rod. A pump, a stepper motor or a feed apparatus of this kind, would again be composed of fewer moveable parts and would thus require less maintenance and be more cost effective to manufacture.

Preferably the structure is a member selected from the group comprising an open structure, a partially closed structure and a closed structure. Such structures advantageously permit a unidirectional movement to be carried out relative thereto.

Preferred applications of the converter described herein are the use as a part of an apparatus functioning as one of an inchworm motor, a stepper motor, a peristaltic pump and a pipeline pig.

Preferably the first said member having a positive Poisson's ratio is made of a material selected from the group of materials comprising metal, rubber, plastic, composite materials and combinations thereof preferably in the form of a structure having the desired mechanical properties. Mechanical metamaterials composed of the aforementioned materials and designed to have the desired Poisson ratio and Young's modulus are desirable. Such materials operate advantageously in a convertor and/or an apparatus including such a convertor. The desired mechanical properties include fatigue resistance, abrasion resistance, and a large region for elastic deformation. Generally, a low Young's modulus is desirable so as to better match the Young's modulus of the auxetic member (which will generally have a low Young's modulus).

In a very preferred embodiment the second said member having a negative Poisson's ratio is a material selected from the group of materials comprising metal, rubber, plastic, composite materials and combinations thereof. Mechanical metamaterials composed of the aforementioned materials and designed to have the required Poisson's ratio and Young's modulus are desirable. Mechanical metamaterials allow the material properties of the members to be tuned to complement one another. These materials advantageously permit the convertor of the present invention to be used.

In a preferred embodiment the Poisson's ratio of the first member is from -1.0 to - 0.05, wherein the Poisson's ratio of the second member is from 0.05 to 0.5 and the ratio of the magnitudes of the Poisson's ratios of the first and second members is in the range from 0.7 to 2.0. Also, the Young's moduli should be similar. Such ratios of Poisson's ratio and matched Young's moduli mean that the first and second members respectively have approximately the same size of deflection. This means that the first member is preferably configured so that its degree of deflection (deformation) is approximately the same as that of the second member, even though one material deflects (deforms) in a "normal manner" and the other in an "auxetic manner". This is very advantageous since this permits a very homogenous motion to be output by the convertor.

Provision can also be made to adjust the relative coefficient of friction of the first and second member in order to compensate for differences in the Poisson's ratio. This adjustment can be carried out by providing at least one of the members with a coating which increases or decreases the friction of the member. Alternatively, the friction force on the members can be adjusted by changing the relative prestrain of the two members in the channel within which they move.

The invention will be described in the following by way of embodiments in detail with reference to the Drawing, in which is shown:
- Figs. 1a to 1d: a first embodiment of a convertor;
- Figs. 2a & 2b: a second embodiment of a convertor;
- Fig. 3: a third embodiment of a convertor; and
- Fig. 4: a fourth embodiment of a convertor.

Features which have the same or a similar function will be described in the following using the same reference numeral. It is also understood that the description given with respect to reference numerals used in one embodiment also applies to the same reference numerals in connection with other embodiments unless something is stated to the contrary.

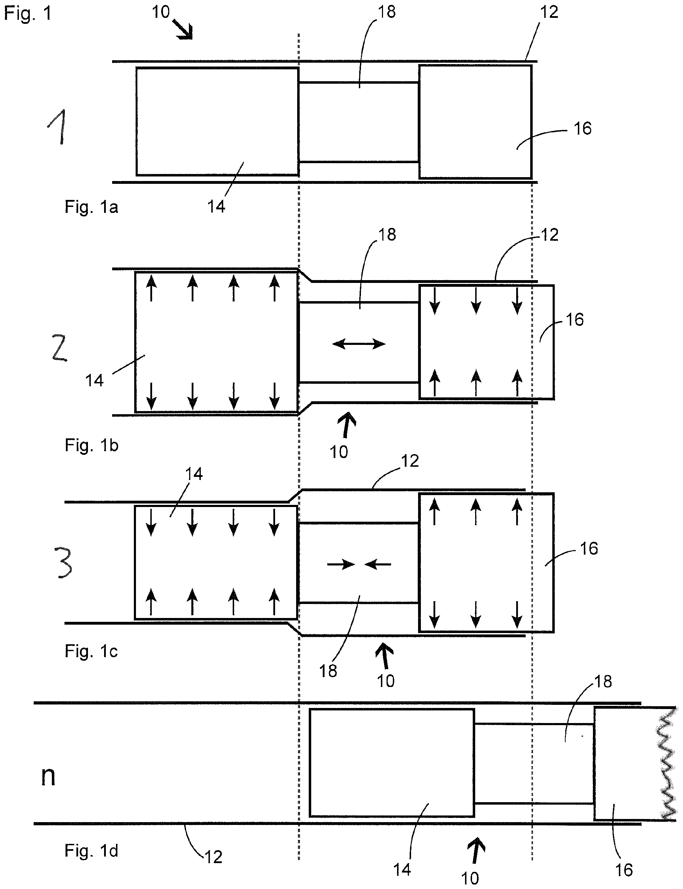

Figs. 1 a to 1 d show a first embodiment of a convertor 10 for converting alternating movement to unidirectional movement in a schematic drawing, for reasons of clarity this is a schematic sectional drawing in which the outer wall of a structure 12 has been left away.

The convertor 10 of Fig. 1 a is installed within the structure 12 formed by a pipe. A first member 14 is visible on the left hand side of the Fig. 1 and a second member 16 is disposed downstream of this first member 14 also within the pipe 12 on the right hand side of the Fig. 1 a. The first member 14 is composed of a normal material and the second member 16 is composed of an auxetic material.

A normal material is a material which has a positive Poisson's ratio, whereas an auxetic material has a negative Poisson's ratio. A material exhibiting a positive Poisson's ratio is a material which on a compression thereof along one axis expands in the transverse directions. In contrast to this a material exhibiting a negative Poisson's ratio is a material which on a compression thereof along one axis also compresses, i.e. it contracts, in the transverse directions. Auxetic materials do exist in nature but then usually contract in just one transverse direction, but not in a direction perpendicular thereto. The majority of auxetic materials are manmade and examples will be given later.

The convertor 10 of Fig. 1 a further comprises an actuator 18 for generating the alternating movement. The actuator 18 is disposed between the first and second members 14, 16 in order to simultaneously exert a compressive force on the first and second members 14, 16 as shown in Fig. 1 b. The actuator 20 is also adapted to simultaneously exert a tensile force on the first and second members 14, 16 as shown in Fig. 1 c. The alternating movement generated by the actuator 18 thus alternates between a state in which it simultaneously exerts a compressive force on the first and second members 14, 16 and a state in which it simultaneously exert a tensile force on the first and second members 14, 16.

The first and second members 14, 16 are both adapted for differential frictional engagement with the structure 12. This means that each member can frictionally engage and disengage the structure 12, this differential engagement is brought about in dependence on the state of the actuator 18, i.e. whether the actuator 18 is in the state in which it simultaneously exerts a compressive force on the first and second members 14, 16 (Fig 1 b) or in the state in which it simultaneously exerts a tensile force on the first and second members 14, 16 (Fig 1 c). It has to be noted in connection with Figs. 1 to 4 that any apparent gaps present between the first and second members 14, 16 and the structure 12 are merely present in order to highlight the different structures 12, 14, 16. When either of the first and second members is actually in frictional engagement with a structure 12, these will be in physical contact with that structure.

As shown in Fig. 1 b when the actuator 18 is in the state in which it simultaneously exerts a compressive force on the first and second members 14, 16 the compressive force acting on the first member 14 causes this to expand in the direction transverse to the direction of the compressive force thus locking the first member 14 to an inside wall of the structure 12, i.e. frictionally engaging the structure 12. At the same time the material of the second member 16 is caused to contract in the transverse direction reducing its frictional engagement with the inside wall of the structure 12 and due to the compressive force the second member 16 will be displaced along the direction of the compressive force. In this case, i.e. in the case of compression, the differential friction means that the first member 14 frictionally engages the structure 12, whereas the second member 16 is frictionally released from or at least contacts the structure 12 with a lower frictional force than the first member 14. Thus the second member 16 is moved to the right in Fig. 1 b while the compressive force is acting on the first and second members 14, 16.

On changing the state of the actuator 18, i.e. on alternating from the state in which the actuator 18 simultaneously exerts a compressive force on the first and second members 14, 16 to the state in which it simultaneously exerts a tensile force on the first and second members 14, 16 as shown in Fig. 1 c, the tensile force applied on the second member 16 causes this to not only expand in a direction in which the force is applied but also in a direction transverse thereto, so that the second member 16 is brought into frictional engagement with the structure 12. At the same time the tensile force acting on the first member 14 causes the first member 14 to contract in the transverse direction and thus to reduce its frictional engagement with the inside wall of the structure 12. The tensile force thus causes the first member 14 to also shift to the right in Fig. 1 c, whereas the second member 16 remains stationary. In this case, i.e. in the case of tension, the differential friction means that the second member 16 frictionally engages the structure 12, whereas the first member 14 is frictionally released from or at least contacts the structure 12 with a lower frictional force than the second member 16.

Fig. 1 d shows how the convertor 10 has shifted to the right within the structure 12 after n repeated cycles of the alternating movement. In order to better illustrate the respective differential frictional engagement of the first and second members 14, 16 within the structure 12 the respective engagement of the first and second members 14, 16 within the structure 12 has been drawn as if it were to significantly outwardly deform the structure 12. Such a deformation naturally arises but for many applications would be kept as small as possible. The convertor 10 shown in Figs. 1 a to 1 d is adapted for linear movement.

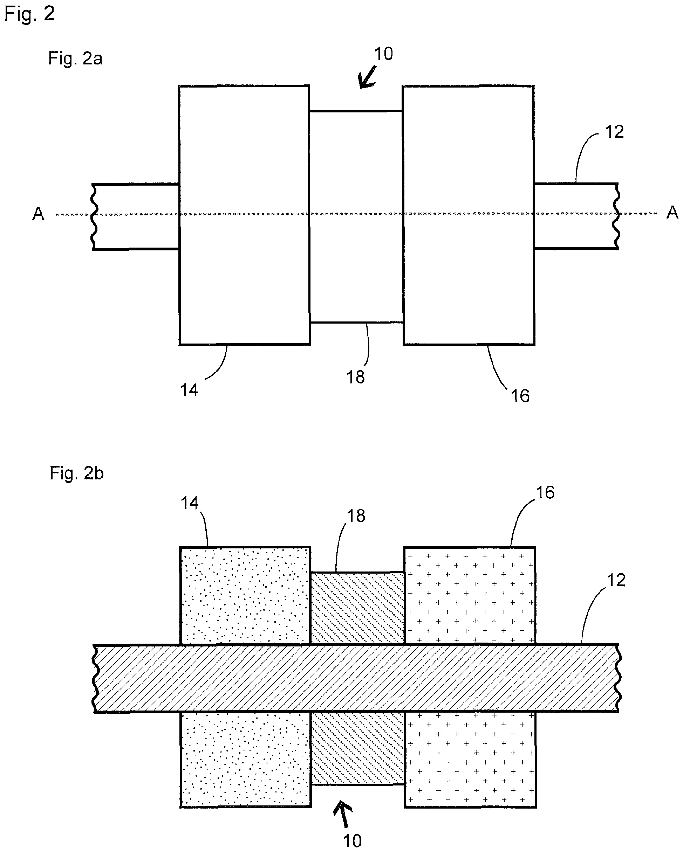

Fig. 2a shows a further type of convertor 10 installed on the outside of a structure 12 and moveable relative to the structure 12. Rather like the convertor 10 of Figs. 1 a to 1 d when the second member 16 (comprising the auxetic material) is acted on by a compressive force brought about by the actuator 18, the frictional engagement is disengaged from the structure 12 or at least contacts the structure 12 with a lower frictional force than the first member 14 permitting the second member 16 to be moved relative to the structure 12 and the first member 14, since the compressive force causes the first member 14 to clampingly engage the structure 12 and thus the second member 16 is able to be moved away from this. After n repeated cycles the convertor 10 will have moved relative to the structure 12 in a similar manner to the convertor 10 of Fig. 1 d.

In the example shown in Fig. 2a, either the structure 12 or the convertor 10 can be fixed to bring about a movement of either the convertor 10 or the structure 12 respectively relative to the fixed component. Thereby the convertor 10 can for example be used to move along a structure 12, such as a cable of a cable car and/or along a pipe exterior.

When the convertor 10 is fixed and the structure 12 is moveable, it can for example be used as a feed device to feed the structure 12 e.g. in the form of a welding wire to a welding position (not shown). Fig. 2b shows a section taken along the sectional line A:A and indicates that the convertor 10 substantially completely surrounds the structure 12.

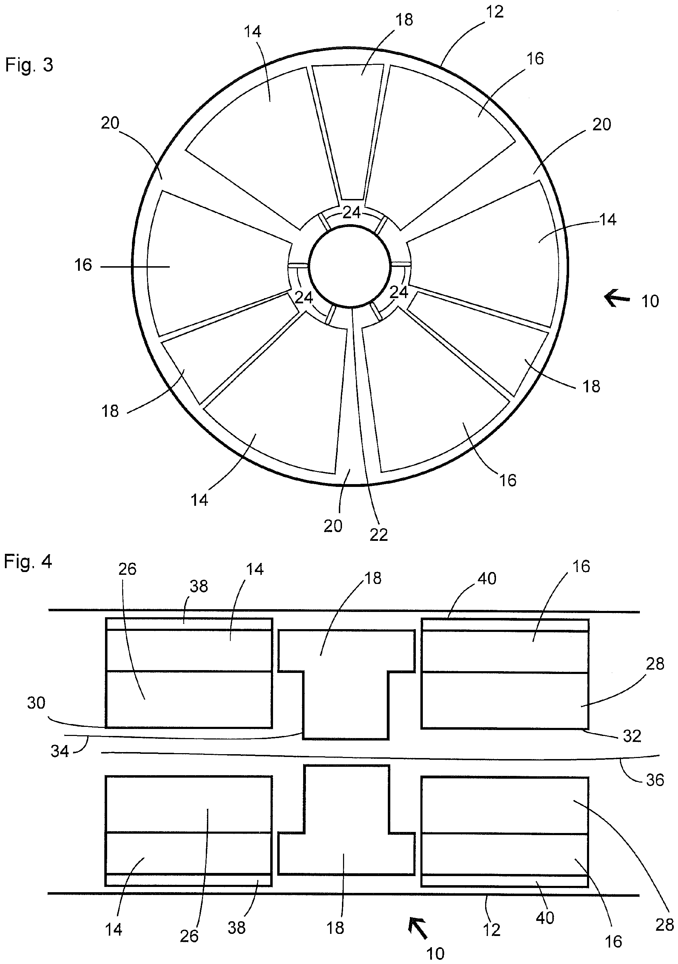

Fig. 3 shows a further type of convertor 10 composed of a plurality of pairs of first and second members 14, 16 and installed within a structure 12. The pairs of first and second members 14, 16 are installed in a parallel arrangement with a buffer space 20, possibly only an air gap, present between respective pairs of first and second members 14, 16. The pairs of first and second members 14, 16 are respectively coupled to an internal component 22 via arms 24 and cooperate with one another via a respective actuator 18. The convertor 10 shown in Fig. 3 is adapted for rotational movement about the internal component 22 relative to the structure 12. The internal component can be a shaft 22 and thus the convertor 10 can, for example be used as a stepper motor 10 rotating the shaft 22.

The arms 24, which are preferably slightly flexible, permit the movement of the first and second members to be transferred to the internal component 22, so that the internal component 22 is moved relative to the pairs of first and second members 14, 16. The internal component 22 - preferably a shaft - is supported by a plurality of bearings or support structures (both not shown). On activation of the respective actuators 18 the first members 14 respectively frictionally engage the structure 12 and the second members 16 frictionally disengage the structure 12 and are displaced to the right, i.e. in the clockwise direction of Fig. 3. This means the shaft 22 can rotate in the clockwise direction.

In this connection it has to be noted that the arms 24 are not strictly necessary, the members 14, 16 of Fig. 3 could also directly contact the internal component 22 without the arms being present.

In such a design the Poisson's ratio of the material of the second member 16 is selected such that the second material 16 can move into the buffer space 20, but does not come into engagement with the first member 14 of the next pair of first and second members 14, 16. The actuator 18 is then activated to bring about a tensile force, i.e. the second member 16 frictionally engages the structure 12, whereas the first member 14 is frictionally released from or at least contacts the structure 12 with a lower frictional force than the second member 16 and the first member 14 follows the direction of movement of the second member 16. By means of the arms 24, the shaft 22 is also rotated in the clockwise direction so that the convertor 10 of Fig. 3 converts an alternating movement into a unidirectional rotational movement of the shaft 22.

Fig. 4 shows an illustration similar to that of Fig. 1. In contrast to the embodiment shown in Fig.1 the first and second members are respectively arranged on a respective support structure 26, 28. Each support structure comprising a respective supply shaft 30, 32 through which supply cables 34, e.g. electric cables, lubrication cables etc., can be fed to the actuator 18 for the operation thereof. In addition to the supply cables 34, so-called device cables 36 e.g. a cable of a camera (not shown) can be guided within the structure 12 in an interior of the convertor 10. This can for example be done to prevent the cable 36 of the camera from becoming stuck within the structure 12. Such an assembly can be used as an inspection device or in order to transport further components (not shown) within the structure 12.

Each of the first and second members 14, 16 of Fig. 4 has a coating or layer 38, 40 provided thereon. This coating or layer 38, 40 is a friction enhancing coating or layer which generates an increased coefficient of friction with the structure 12 and prevents unwanted slippage of the first and second members 14, 16 which is engaging the structure 12 at any one time. This coating or layer 38, 40 can naturally be included in any type of convertor in accordance with the present invention.

The convertor 10 of Fig. 4 is capable of moving within the structure 12 like the convertor 10 of Fig. 1. The difference between Figs. 1 and 4 is that the support structures 26, 28 are to a large extent not affected by the changes in shape of the first and second members 14, 16 brought about by means of the actuator 18. The linear movement of the convertor 10 is however substantially unaffected by this alternative design.

Expressed in the words of the inventors the convertor 10 of Figs. 1 a to 1 d can be considered to be a system which employs two contact segments which are joined and acted on by a single axial actuator 18, i.e. an actuator 18 which alternates between a state in which it simultaneously exerts a compressive force on both of the contact segments and a second state in which it simultaneously exerts a tensile force on both contact segments. The front contact segment is made from an auxetic material. The rear segment is made from a material having a positive Poisson's ratio. Preferably the magnitude of the Poisson's ratio of the first and second members 14, 16 are approximately the same albeit their signs being different. The system moves within a closely fitting tube which it touches only through the front and rear contact segments. Alternatively it could move along a central shaft (see e.g. Fig. 2).

The drive sequence of this system is:
1) a relaxed state, i.e. no forces acting on the contact segments (see Fig. 1 a).
2) Extension of the axial actuator 18 which compress both segments. The trailing normal segment responds by expanding laterally which increases the radial force on the tube walls and hence the force of friction between the segment and the tube. The leading auxetic segment responds to compression by contracting reducing the radial force and lowering the force of friction. The differences in friction mean that the normal segment will remain stationary and the auxetic segment will move forward (see Fig. 1 b).
3) contraction of the actuator 18 applies tension to both contact segments. The trailing segment sees a reduction of the friction force, whereas the leading segment sees an increase in friction, so that the auxetic segment remains stationary and the normal segment is pulled forward (see Fig. 1 c).

Examples of auxetic materials, i.e. materials having a negative Poisson's ratio are: some single crystal organic species, and specially processed foams and engineered composite materials having reentrant structures also known as mechanical metamaterial having reentrant structure and exhibiting auxetic behavior. Examples of material having a positive Poisson's ratio are: virtually all common engineering materials: metals, e.g. aluminium, stainless steel etc., polymers, and ceramics.

Ultimately the alternator requires energy so that the convertor 10 could also be considered to convert energy into unidirectional movement. This could for example be achieved, if the actuator 18 present between the first and second members 14, 16 of the convertor 10 of Figs. 1 a to 1 d were to be replaced by two metal plates and if two moveable plates were to be installed between the first and second members 14, 16. The space between these plates could then be varied by applying either a vacuum or an overpressure between these plates causing the plates to either move towards one another or apart from one another in order to effect a simultaneous tensile or compressive force on the first and second members 14, 16.

## Claims

1. A convertor (10) for converting alternating movement to unidirectional movement, the convertor (10) comprising an actuator (18) for generating the alternating movement, the actuator (18) being disposed to exert compressive and tensile forces on first and second members (14, 16), the first said member having a positive Poisson's ratio and the second said member having a negative Poisson's ratio, and the first and second members (14, 16) being adapted for differential frictional engagement with a structure (12).

2. A convertor (10) in accordance with claim 1, wherein the unidirectional movement is at least one of linear movement and rotational movement.

3. A convertor (10) in accordance with claim 1 or claim 2, wherein the convertor (10) is installed within the structure, such as a pipe, whereby the convertor (10) moves unidirectionally within the structure (12).

4. A convertor (10) in accordance with claim 1 or claim 2, wherein the convertor (10) can be installed outside of the structure (12), such as a tube or a rope, whereby the convertor (10) moves unidirectionally outside of the structure (12).

5. A convertor (10) in accordance with any one of the preceding claims, wherein the alternating movement is one of a cyclic movement or an oscillatory movement, such as alternating expansion and contraction movements generated by a rotary engine or a pressure generated alternating movement between an expanded state and a contracted state.

6. A convertor (10) in accordance with any one of the preceding claims, wherein the actuator (18) is a member selected from the group comprising a pneumatic actuator (18), a hydraulic actuator (18), a piezoelectric actuator (18), an electrostatic actuator (18), an electromagnetic actuator (18) and an internal combustion engine.

7. A convertor (10) in accordance with any one of the preceding claims, further comprising a plurality of pairs of first and second members (14, 16).

8. A convertor (10) in accordance with claim 7, further comprising a plurality of actuators (18), the actuators (18) being disposed to exert compressive and tensile forces on the plurality of pairs of first and second members (14, 16).

9. A convertor (10) in accordance with claim 7 or claim 8, wherein the plurality of pairs of first and second members (14, 16) are used to effect a rotational unidirectional movement relative to the structure (12).

10. A convertor (10) in accordance with any one of the preceding claims, wherein the convertor (10) is used in apparatus adapted to at least one of the following purposes selected from the group comprising feeding a welding rod, cleaning of structures, such as a pipeline, rope climbing, as an inspection device, for example in sewers and pipes, such as for weld inspection, as a placement device, for example in nuclear reactors to avoid human exposure to radiation or to avoid opening a vessel or to place a camera, in medical applications, for example for inspection of blood vessels and the placement of stents.

11. A convertor (10) in accordance with at least one of the preceding claims, wherein the converter (10) is used as a pump in order to effect a movement of substances relative to the structure, for example to move a column of liquid along a pipe.

12. A convertor (10) in accordance with any one of the preceding claims, wherein the structure (12) is a member selected from the group comprising an open structure, a partially closed structure and a closed structure.

13. A convertor (10) in accordance with any one of the preceding claims, wherein the converter (10) is a part of an apparatus functioning as one of an inchworm motor, a stepper motor, a feed apparatus, a peristaltic pump and a pipeline pig.

14. A convertor (10) in accordance with any one of the preceding claims, wherein the first said member (14) having a positive Poisson's ratio is made of a material selected from the group of materials comprising metal, rubber, plastic, polymers, ceramics and combinations thereof, and/or wherein the second said member (16) having a negative Poisson's ratio is a material selected from the group of materials comprising foam or other mechanical metamaterial having reentrant structure and exhibiting auxetic behavior, and/or wherein the first and second members (14, 16) further comprise a friction enhancing outer coating or layer (38,40).

15. A convertor (10) in accordance with any one of the preceding claims, wherein the Poisson's ratio of the first member (14) is from -1.0 to -0.05, wherein the Poisson's ratio of the second member (16) is from 0.05 to 0.5 and the ratio of the Poisson's ratios of the first and second members (14, 16) is in the range from 0.7 to 2.0.

## Patentansprüche

1. Wandler (10) zum Umwandeln einer alternierenden Bewegung in eine unidirektionale Bewegung, wobei der Wandler (10) einen Aktor (18) zum Erzeugen der alternierenden Bewegung umfasst, wobei der Aktor (18) so angeordnet ist, Druck- und Zugkräfte auf ein erstes und zweites Element (14, 16) auszuüben, wobei das erste Element eine positive Poissonzahl aufweist und das zweite Element eine negative Poissonzahl aufweist, und wobei das erste und zweite Element (14, 16) für einen Differenzreibungseingriff mit einem Aufbau (12) angepasst sind.

2. Wandler (10) nach Anspruch 1, wobei die unidirektionale Bewegung zumindest eine aus einer Linearbewegung und einer Rotationsbewegung ist.

3. Wandler (10) nach einem der Ansprüche 1 oder 2, wobei der Wandler (10) in dem Aufbau, wie einem Rohr, installiert ist, wobei sich der Wandler (10) unidirektional in dem Aufbau (12) bewegt.

4. Wandler (10) nach einem der Ansprüche 1 oder 2, wobei der Wandler (10) außerhalb des Aufbaus (12), wie einem Rohr odereinem Seil, installiert sein kann, wobei sich der Wandler (10) unidirektional außerhalb des Aufbaus (12) bewegt.

5. Wandler (10) nach einem der vorhergehenden Ansprüche, wobei die alternierende Bewegung eine von einer zyklischen Bewegung oder einer oszillierenden Bewegung, wie alternierende Expansions- und Kontraktionsbewegungen, die durch einen rotierenden Motor erzeugt werden, oder eine druckerzeugte alternierende Bewegung zwischen einem expandierten Zustand und einem kontrahierten Zustand ist.

6. Wandler (10) nach einem der vorhergehenden Ansprüche, wobei der Aktor (18) ein Element ist, das aus der Gruppe gewählt ist, die einen Druckluftaktor (18), einen Hydraulikaktor (18), einen piezoelektrischen Aktor (18), einen elektrostatischen Aktor (18), einen elektromagnetischen Aktor (18) und einen Verbrennungsmotor umfasst.

7. Wandler (10) nach einem der vorhergehenden Ansprüche, ferner mit einer Mehrzahl von Paaren aus erstem und zweitem Element (14, 16).

8. Wandler (10) nach Anspruch 7, ferner mit einer Mehrzahl von Aktoren (18), wobei die Aktoren (18) so angeordnet sind, Druck- und Zugkräfte auf die Mehrzahl von Paaren aus erstem und zweitem Element (14, 16) auszuüben.

9. Wandler (10) nach einem der Ansprüche 7 oder 8, wobei die Mehrzahl von Paaren aus erstem und zweitem Element (14, 16) verwendet sind, um eine unidirektionale Rotationsbewegung relativ zu dem Aufbau (12) zu bewirken.

10. Wandler (10) nach einem der vorhergehenden Ansprüche, wobei der Wandler (10) in einer Einrichtung verwendet ist, die an zumindest eine der folgenden Aufgaben angepasst ist, die aus der Gruppe gewählt sind, die umfasst: Zuführen einer Schweißstange, Reinigen von Aufbauten, wie einer Rohrleitung, Seilklettern, wie eine Inspektionsvorrichtung, beispielsweise in Abwasserkanälen und Rohren, wie zur Schweißinspektion, als eine Platzierungsvorrichtung, beispielsweise Nuklearreaktoren, um einen menschlichen Kontakt gegenüber Strahlung zu vermeiden oder ein Öffnen eines Gefäßes zu vermeiden oder eine Kamera zu platzieren, in medizinischen Anwendungen, beispielsweise zur Prüfung von Blutgefäßen und der Platzierung von Stents.

11. Wandler (10) nach einem der vorhergehenden Ansprüche, wobei der Wandler (10) als eine Pumpe verwendet ist, um eine Bewegung von Substanzen relativ zu dem Aufbau zu bewirken und beispielsweise eine Flüssigkeitssäule entlang eines Rohres zu bewegen.

12. Wandler (10) nach einem der vorhergehenden Ansprüche, wobei der Aufbau (12) ein Element ist, das aus der Gruppe gewählt ist, die einen offenen Aufbau, einen teilweise geschlossenen Aufbau und einen geschlossenen Aufbau umfasst.

13. Wandler (10) nach einem der vorhergehenden Ansprüche, wobei der Wandler (10) ein Teil einer Vorrichtung ist, die als ein Piezo- bzw. Inchworm-Motor, ein Schrittmotor, eine Zuführvorrichtung, eine Schlauchpumpe oder ein Rohrmolch dient.

14. Wandler (10) nach einem der vorhergehenden Ansprüche, wobei das erste Element (14) mit einer positiven Poissonzahl aus einem Material hergestellt ist, das aus der Gruppe von Materialien gewählt ist, die umfasst: Metall, Gummi, Kunststoff, Polymere, Keramiken und Kombinationen daraus, und/oder wobei das zweite Element (16) mit einer negativen Poissonzahl ein Material ist, das aus der Gruppe von Materialien gewählt ist, die umfasst: einen Schaum oder ein anderes mechanisches Metamaterial, das eine sich rückbildende Struktur besitzt und ein auxetisches Verhalten aufweist, und/oder wobei das erste und zweite Element (14, 16) ferner eine reibungsverbessernde Außenbeschichtung oder Schicht (38, 40) umfassen.

15. Wandler (10) nach einem der vorhergehenden Ansprüche, wobei die Poissonzahl des ersten Elements (14) zwischen -1,0 bis -0,05 liegt, wobei die Poissonzahl des zweiten Elements (16) zwischen 0,05 und 0,5 liegt und wobei das Verhältnis der Poissonzahlen des ersten und zweiten Elements (14, 16) im Bereich von 0,7 bis 2,0 liegt.

## Revendications

1. Convertisseur (10) pour convertir un mouvement alternatif en un mouvement unidirectionnel, le convertisseur (10) comprenant un actionneur (18) pour générer de mouvement alternatif, l'actionneur (18) étant disposé pour exercer des forces de compression et de traction sur un premier et un second élément (14, 16), le premiers desdits éléments ayant un rapport de Poisson positif et le second desdits éléments ayant un rapport de Poisson négatif, et le premier et le second élément (14, 16) sont adaptés pour un engagement en friction différentielle avec une structure (12).

2. Convertisseur (10) selon la revendication 1, dans lequel le mouvement unidirectionnel est au moins un mouvement parmi un mouvement linéaire et un mouvement rotatif.

3. Convertisseur (10) selon la revendication 1 ou 2, dans lequel le convertisseur (10) est installé à l'intérieur de la structure, comme un tube, grâce à quoi le convertisseur (10) se déplace de manière unidirectionnelle à l'intérieur de la structure (12).

4. Convertisseur (10) selon la revendication 1 ou 2, dans lequel le convertisseur (10) peut être installé à l'extérieur de la structure (12), comme un tube ou une corde, grâce à quoi le convertisseur (10) se déplace de manière unidirectionnelle à l'extérieur de la structure (12).

5. Convertisseur (10) selon l'une quelconque des revendications précédentes, dans lequel le mouvement alternatif est un mouvement parmi un mouvement cyclique et un mouvement oscillatoire, tels que des mouvements alternatifs d'expansion et de contraction générée par un moteur rotatif ou une pression générée par un mouvement alternatif entre un état en expansion et un état contracté.

6. Convertisseur (10) selon l'une quelconque des revendications précédentes,
dans lequel l'actionneur (18) est un élément sélectionné parmi le groupe comprenant un actionneur pneumatique (18), un actionneur hydraulique (18), un actionneur piézoélectrique (18), un actionneur électrostatique (18), un actionneur électromagnétique (18) et un moteur à combustion interne.

7. Convertisseur (10) selon l'une quelconque des revendications précédentes, comprenant en outre une pluralité de paires formées d'un premier et d'un second élément (14, 16).

8. Convertisseur (10) selon la revendication 7, comprenant en outre une pluralité d'actionneurs (18), les actionneurs (18) étant disposés pour exercer des forces de compression et de traction sur la pluralité de paires formées d'un premier et d'un second élément (14, 16).

9. Convertisseur (10) selon la revendication 7 ou 8, dans lequel la pluralité de paires formées d'un premier et d'un second élément (14, 16) sont utilisées pour effectuer un mouvement de rotation unidirectionnelle par rapport à la structure (12).

10. Convertisseur (10) selon l'une quelconque des revendications précédentes, dans lequel le convertisseur (10) est utilisé dans un appareil adapté à l'une des tâches suivantes, sélectionnée parmi le groupe comprenant l'avancée d'une tige de soudage, le nettoyage de structures, comme un pipeline, l'ascension sur un câble, comme un dispositif d'inspection, par exemple dans des égouts et dans des tubes, comme pour l'inspection des soudures, à titre de dispositif de mise en place, par exemple dans des réacteurs nucléaires pour éviter l'exposition humaine aux radiations ou pour éviter d'ouvrir un récipient ou de placer une caméra, dans des applications médicales, par exemple pour l'inspection de vaisseaux sanguins et la mise en place de stents.

11. Convertisseur (10) selon l'une au moins des revendications précédentes, dans lequel le convertisseur (10) est utilisé à titre de pompe afin d'effectuer un mouvement de substances par rapport à la structure, par exemple pour déplacer une colonne de liquide le long d'un tube.

12. Convertisseur (10) selon l'une quelconque des revendications précédentes, dans lequel la structure (12) est un élément sélectionné parmi le groupe comprenant une structure ouverte, une structure partiellement fermée, et une structure fermée.

13. Convertisseur (10) selon l'une quelconque des revendications précédentes, dans lequel le convertisseur (10) fait partie d'un appareil fonctionnant comme un parmi un moteur à chenille, un moteur pas à pas, un appareil d'amenée, une pompe péristaltique, et un racleur de pipeline.

14. Convertisseur (10) selon l'une quelconque des revendications précédentes,
dans lequel le premier desdits éléments (14) ayant un rapport de Poisson positif est fait d'un matériau sélectionné parmi le groupe de matériaux comprenant métal, caoutchouc, matière plastique, polymère, céramique et leurs combinaisons, et/ou dans lequel le seconds desdits éléments (16) ayant un rapport de Poisson négatif est un matériau sélectionné parmi le groupe de matériaux comprenant une mousse ou un autre matériau métallique mécanique ayant une structure rentrante et présentant un comportement auxétique, et/ou dans lequel le premier et le second élément (14, 16) comprennent en outre un revêtement ou une couche extérieure renforçant la friction (38, 40).

15. Convertisseur (10) selon l'une quelconque des revendications précédentes, dans lequel le rapport de Poisson du premier élément (14) est de -1,0 à -0,05, dans lequel le rapport de Poisson du second élément (16) est de 0,05 à 0,5, et le rapport des rapports de Poisson du premier et du second élément (14, 16) est dans la plage de 0,7 à 2,0.
